Europäisches Patentamt

(19) European Patent Office

Office européen des brevets

(11) Numéro de publication : **0 296 990 B1**

(12) # FASCICULE DE BREVET EUROPEEN

(45) Date de publication du fascicule du brevet :
04.12.91 Bulletin 91/49

(51) Int. Cl.⁵ : **C08F 136/06, C08F 2/10,**
**C08F 4/30**

(21) Numéro de dépôt : **88420184.9**

(22) Date de dépôt : **07.06.88**

(54) Procédé de fabrication de polybutadiène hydroxylé.

(30) Priorité : **15.06.87 FR 8708571**

(43) Date de publication de la demande :
**28.12.88 Bulletin 88/52**

(45) Mention de la délivrance du brevet :
**04.12.91 Bulletin 91/49**

(84) Etats contractants désignés :
**AT BE CH DE ES FR GB IT LI LU NL SE**

(56) Documents cités :
**US-A- 4 518 770**

(73) Titulaire : **ATOCHEM**
**4 & 8, Cours Michelet La Défense 10**
**F-92800 Puteaux (FR)**

(72) Inventeur : **Audry, Richard**
**Rue Hervieu Deschênes**
**F-27170-Beaumont-Le-Roger (FR)**
Inventeur : **Krempf, Gérard**
**2, Rue Nicolas Berthet**
**F-69110-Sainte-Foy-Les-Lyon (FR)**
Inventeur : **Perono, Jackie**
**57, Rue Pasteur**
**F-69007-Lyon (FR)**

## Description

La présente invention concerne un procédé de fabrication de polybutadiène hydroxylé, homopolymère du butadiène renfermant des groupes hydroxyles, à partir d'un monomère diénique en présence de peroxyde d'hydrogène et d'un solvant.

Elle concerne plus particulièrement dans un tel procédé la récupération du solvant.

Il est connu de préparer le polybutadiène hydroxylé selon par exemple les méthodes décrites dans les brevets des Etats-Unis d'Amérique n°3673168, n°3796762 ou n°4518770. Le dernier cité rappelle la nature et les qualités des diènes et des solvants utilisables. Comme diène-1,3, le butadiène-1,3 est le plus fréquemment mis en oeuvre. Le propanol-2 ou isopropanol est souvent choisi comme solvant.

Le solvant, après que le polybutadiène hydroxylé représentant la production en ait été séparé, est récupéré en vue de son recyclage, à partir d'un mélange désigné dans tout ce qui suit par mélange solvant.

Celui-ci contient, à côté du solvant, de l'eau qui, du fait par exemple de l'apport possible d'eau de lavage ou de condensat, peut être présente en quantité largement prédominante, du peroxyde d'hydrogène et d'autres composés désignés dans tout ce qui suit par impuretés comme, par exemple et essentiellement, le vinylcyclohexène, de faibles quantités de monomère diénique, des polybutadiènes parfois en quantité notable, de l'acétone le cas échéant.

Le mélange solvant a en conséquence une composition pondérale qui varie entre des limites assez éloignées ; par exemple : solvant comme l'isopropanol : 5% à 80%, eau : 10% à 90%, peroxyde d'hydrogène : 0,2% à 4%, le plus souvent 1% à 3%, impuretés : moins de 10% dont généralement, vinylcyclohexène : 0,2% à 5%, polymères en majorité de type polybutadiènes de faible poids moléculaire : 0,01% à 5%, butadiène : moins de 0,1%. Il peut contenir encore 0,05% à 0,2% d'acétone par exemple quand le solvant est l'isopropanol.

La récupération du solvant a lieu dans la partie du procédé réservée à cet effet et désignée dans tout ce qui suit par section de récupération.

Elle est communément réalisée par distillation du mélange solvant. Une description et un schéma d'un tel processus en deux colonnes de distillation sont donnés par exemple dans le brevet des Etats-Unis d'Amérique n°4518770.

Malheureusement, si le mélange solvant est soumis directement à la distillation celle-ci est fortement perturbée par l'encrassement rapide des colonnes, en particulier au-dessous des niveaux d'alimentation. Il s'ensuit l'obstruction des éléments de distillation, par exemple plateaux et déversoirs, par des matières solides attribuées à la présence dans le mélange solvant de peroxyde d'hydrogène et de certaines impuretés comme des polymères ou des composés encore polymérisables.

Pour réduire cet inconvénient majeur, dont les conséquences néfastes se font sentir sur le rendement de récupération du solvant comme sur sa qualité, le brevet des Etats-Unis d'Amérique n°4518770 propose de ne distiller le mélange solvant qu'après lui avoir adjoint un sulfite ou un bisulfite de métal alcalin.

Une telle méthode présente au moins deux inconvénients, celui de conduire à un rejet de sels et celui d'autoriser les impuretés contenues dans le mélange solvant, le sel ajouté et leurs produits d'évolution, à pénétrer en distillation.

La présente invention permet d'éviter de tels inconvénients en même temps qu'elle assure un fonctionnement des colonnes de distillation de très longue durée sans gêne due à l'encrassement, et un rendement élevé de récupération du solvant.

Elle est caractérisée, dans son aspect principal, en ce qu'avant distillation le mélange solvant tel que défini plus haut est soumis à l'action d'un hydroxyde de métal alcalin ou à l'action de l'hydrazine.

L'hydroxyde généralement choisi en pratique est l'hydroxyde de sodium.

L'hydrazine est mis en oeuvre sous forme d'hydrate d'hydrazine.

L'hydroxyde ou l'hydrazine agissent selon l'invention à une température comprise entre 20°C et 150°C et souvent choisie égale à la température d'ébullition à pression atmosphérique du milieu dans lequel l'un ou l'autre agit.

Par exemple, cette température d'ébullition est de l'ordre de 80°C dans le cas des mélanges solvant les plus fréquemment rencontrés lorsque l'isopropanol est le solvant.

La quantité d'hydroxyde mis en oeuvre exprimée en pour cent en poids d'hydroxyde de sodium dans le milieu est comprise entre environ 0,1% et 1%. Elle est le plus souvent comprise entre 0.3% et 0.6% lorsque le peroxyde d'hydrogène se trouve à une concentration initiale comprise dans la gamme la plus courante.

La quantité d'hydrate d'hydrazine mis en oeuvre doit en général être telle que le rapport molaire hydrazine/peroxyde d'hydrogène soit supérieur à 0,5 et de préférence compris entre environ 0,75 et 1.

La durée d'action de l'hydroxyde ou de l'hydrazine dépend des autres paramètres mais est comprise en général entre 5 minutes et 5 heures, le plus souvent entre 15 minutes et 4 heures.

L'action de l'hydroxyde ou de l'hydrazine sur le mélange solvant s'opère par mélange par exemple dans un réacteur pourvu essentiellement d'un moyen d'agitation, d'un moyen de chauffage controlable, d'un condenseur à reflux combiné avec un système permettant d'évacuer hors du réacteur l'azote formé lors de l'action de l'hydrazine, ou l'oxygène formé lors de l'action de l'hydroxyde. Dans ce dernier cas plus spécialement il convient que le risque de formation d'un mélange gazeux explosif soit évité, par exemple par admission d'azote ou réglage du taux d'ébullition le cas échéant. La pression absolue dans le réacteur sera le plus généralement comprise entre 1 et 5 bars absolus.

Lorsque par mise au repos du produit obtenu au terme de l'action de l'hydroxyde ou de l'hydrazine une phase d'aspect huileux se sépare comme c'est le cas le plus généralement, elle est de préférence éliminée. Cette élimination peut être réalisée selon le cas par exemple par pompage, écoulement simple ou par débordement par exemple dans un séparateur de phase ou décanteur. La phase huileuse ainsi évacuée, qui généralement représente moins de 5% en poids, peut être détruite, par exemple par incinération.

Le produit restant peut ensuite soit entrer directement en distillation, soit, de préférence, être soumis à une vaporisation par ébullition pour former un courant gazeux qui constitue alors le produit entrant en distillation. Il a été en effet observé que l'action de l'hydroxyde ou de l'hydrazine rend les impuretés indésirables pratiquement séparables grâce à ladite vaporisation qui peut être effectuée à l'aide d'un appareillage connu du type par exemple bouilleur facilement nettoyable, à recirculation ou non, par exemple un évaporateur à film à raclage, équipé essentiellement d'un moyen de chauffage, par exemple par double enveloppe, d'un système de dévésiculage des vapeurs produites, d'un système d'évacuation continue ou non des produits non vaporisés. Ceux-ci représentent en général entre environ 2% et 6% du poids de produit soumis à vaporisation. Ils peuvent être détruits par incinération.

La vaporisation par ébullition est réalisée en pratique à une pression égale ou supérieure à la pression de fonctionnement dans la première colonne. Elle est comprise généralement entre 1 et 5 bars absolus, et souvent égale ou proche de 1 bar absolu.

Pour parfaire la récupération du solvant à ce stade une fraction des produits non vaporisés extraits du vaporiseur peut retourner à l'étape de séparation de la phase organique qui a lieu après action de l'hydroxyde ou de l'hydrazine.

Il est possible d'opérer à l'aide de deux vaporiseurs installés en parallèle, l'un en fonctionnement, l'autre en nettoyage.

La réalisation de l'invention dans une section de récupération conçue selon un schéma de procédé qui peut être comparé à celui décrit dans le brevet des Etats-Unis d'Amérique n°4518770, permet de réunir des conditions conduisant à une durée de fonctionnement en distillation sans perturbation due à l'encrassement, au moins égale à celle rapportée dans ledit brevet, en prenant pour référence commune les résultats qui peuvent être observés sans addition d'un agent chimique au mélange solvant. Une telle possibilité pourrait être reliée au fait qu'au terme de l'action de l'hydroxyde ou de l'hydrazine la quantité de peroxyde d'hydrogène devient pratiquement nulle ou n'excède pas le plus souvent environ 0.2% en poids, ce qui est un élément positif sur le plan de la sécurité.

Le procédé selon l'invention, lorsqu'il comprend la vaporisation avant distillation, assure un fonctionnement des colonnes de très longue durée en interdisant aux produits source d'encrassement de les atteindre.

Le traitement des effluents est facilité. L'hydroxyde qu'ils contiennent peut même contribuer par exemple à la neutralisation d'un effluent acide d'autre origine. L'hydrazine ne s'y retrouve que sous forme d'eau.

L'invention présente l'avantage supplémentaire de pouvoir convenir à la récupération du solvant à partir de mélanges solvant dans lesquels des polymères sont présents même en quantité déjà élevée.

L'invention convient à une réalisation continue ou discontinue.

Les exemples suivants, donnés à titre indicatif mais non limitatif illustrent l'invention.

EXEMPLE 1 :

La fabrication de polybutadiène hydroxylé à partir de butadiène-1,3, de peroxyde d'hydrogène et d'isopropanol comme solvant, a conduit à un mélange solvant dont la composition pondérale est la suivante : isopropanol : 70%. eau : 17,5%, peroxyde d'hydrogène : 2,6%, acétone : 0,15%, vinylcyclohexènes : 4,5% polymères du type polybutadiènes : 5,22%, autres impuretés dont le butadiène : 0,05%.

Pour 100 g de ce mélange sont ajoutés sous agitation 0,42 g d'hydroxyde de sodium introduit sous forme de solution aqueuse à 30% en poids d'hydroxyde et l'action de ce dernier s'exerce durant 30 minutes à la température d'ébullition à la pression atmosphérique dans un réacteur muni d'un condenseur à reflux.

Au bout de ce laps de temps la concentration en peroxyde d'hydrogène qui est déjà inférieure à 0,02% en poids après 15 minutes n'est plus que de 0.01% en poids. Après refroidissement à 45°C et élimination de la phase huileuse se séparant au repos du reste du milieu, le mélange restant est distillé selon un processus distillatoire rappelé dans le brevet des Etats-Unis d'Amérique n°4518770, sans évidemment avoir à recourir à l'injection de sulfite ou de bisulfite d'un métal alcalin.

Les deux colonnes employées sont des colonnes en verre de 50 mm de diamètre munies de plateaux à cloches.

La distillation est menée en continu comme l'est celle pratiquée pour comparaison à partir du mélange solvant tel quel.

Dans l'essai incorporant l'action de l'hydroxyde de sodium, l'encrassement des colonnes, visible mais d'importance très réduite, n'a aucune incidence sur le régime distillatoire pendant déjà la durée de fonctionnement au bout de laquelle il provoque l'arrêt de la distillation dans l'essai de comparaison.

EXEMPLE 2 :

La fabrication de polybutadiène hydroxylé à partir de butadiène-1,3, de peroxyde d'hydrogène et d'isopropanol comme solvant, a conduit à un mélange solvant dont la composition pondérale est la suivante : isopropanol : 24,3%, eau : 71,3%, peroxyde d'hydrogène : 1%, acétone : 0,04%, vinylcyclohexènes : 1,55%, polymères : 1,8%, autres impuretés dont le butadiène : 0,01%.

Ce mélange est soumis à l'action de l'hydroxyde de sodium comme dans l'exemple 1 à l'exception de la quantité d'hydroxyde qui est de 0,3 g pour 100 g de mélange et de la durée à ébullition qui n'est plus que de 15 minutes au bout desquelles la concentration en peroxyde d'hydrogène est inférieure à 0,01% en poids.

Le processus suivi ensuite est le même que dans l'exemple 1.

Les conclusions faites dans l'exemple 1 par rapport à un essai de comparaison restent valables.

EXEMPLE 3 :

La fabrication de poybutadiène hydroxyglé à partir de butadiène-1,3, de peroxde d'hydrogène et d'isopropanol comme solvant, a conduit à un mélange solvant dont la composition pondérale est la suivante: isopropanol : 42,8%, eau : 49,6%, peroxyde d'hydrogène : 1,6%, acétone : 0,1%, vinylcyclohexène : 2,7%, polyméres essentiellement à base de polybutadiène : 3,2%, autres impuretés dont le butadiène : traces.

Dans un réacteur agité muni d'un système de condensation à reflux et d'un soutirage latéral de liquide en continu tel que 10 l. de liquide restent présents dans le réacteur pendant tout l'essai, sont introduits en continu 2,5 l/h de mélange solvant et 32,3 cm³/h d'une solution aqueuse d'hydroxyde de sodium contenant 30% en poids d'hydroxyde de sodium. Le liquide présent dans le réacteur lorsque débute l'alimentation du mélange solvant et de l'hydroxyde résulte du traitement sans écoulement d'une charge de mélange solvant et d'hydroxyde dans les proportions indiquées ci-dessus pendant 30 minutes à ébullition. Il ne contient par conséquent plus qu'une quantité pratiquement nulle de peroxyde d'hydrogène. L'opération en continu a été poursuivie, toujours à ébullition et sous agitation durant une cinquantaine d'heures pendant lesquelles le produit continuellement issu du réacteur s'est avéré contenir au plus 0,01% en poids de peroxyde d'hydrogène.

Après élimination continue, par débordement, de la phase huileuse formée par mise au repos du mélange issu du réacteur dans un séparateur fonctionnant à 50°C avec 2 heures de temps de séjour, le produit restant est introduit en continu dans un vaporiseur d'où est issu un courant gazeux à une température de 95°C-96°C qui est dévésiculé avant distillation. Les produits non vaporisés par ébullition sont évacués à titre d'effluent à raison en moyenne de 5,0% en poids du mélange entrant dans le vaporiseur.

En distillation, pratiquée en continu de façon classique dans deux colonnes de verre, l'encrassement reste négligeable après une durée de fonctionnement égale à celle pour laquelle des perturbations apparaîssent lorsque le liquide résultant de l'action de l'hydroxyde ou de l'hydrazine est introduit en distillation directement après que la phase huileuse en ait été éliminée.

EXEMPLE 4 :

L'exemple 1 est répété mais en utilisant 2,9 g d'hydrate d'hydrazine $NH_2$-$NH_2$, $H_2O$ à la place de l'hydroxyde de sodium et une durée de 1,5 heure. Les mêmes conclusions que dans l'exemple 1 sont tirées quant à l'amélioration du fonctionnement en distillation.

EXEMPLE 5 :

L'exemple 2 est répété mais en utilisant 1,5 g d'hydrate d'hydrazine à la place de l'hydroxyde de sodium. La quantité de peroxyde d'hydrogène devient pratiquement nulle après les 30 minutes de durée d'action et la conclusion tirée dans l'exemple 2 quant au fonctionnement en distillation reste valable ici.

**Revendications**

1. Procédé de fabrication de polybutadiène hydroxylé à partir d'un monomère diénique en présence de peroxyde d'hydrogène et d'un solvant, dans lequel, une fois séparé le polybutadiène hydroxylé représentant la production, le solvant est dans un mélange à partir duquel il est récupéré par distillation, caractérisé en ce qu'avant distillation ledit mélange est soumis à l'action d'un hydroxyde de métal alcalin ou à celle de l'hydrazine.

2. Procédé selon la revendication 1, caractérisé en ce que l'hydroxyde est l'hydroxyde de sodium.

3. Procédé selon l'une des revendications 1 et 2, caractérisé en ce que l'hydroxyde est mis en oeuvre à raison de 0,1 à 1% en poids du mélange dans lequel il agit.

4. Procédé selon la revendication 3, caractérisé en ce que l'hydroxyde est mis en oeuvre à raison de 0,3% à 0,6% en poids du mélange dans lequel il agit.

5. Procédé selon la revendication 1, caractérisé en ce que l'hydrazine est mis en oeuvre de façon à ce que le rapport molaire hydrazine/peroxyde d'hydrogène soit supérieur à 0,5.

6. Procédé selon la revendication 5, caractérisé en ce que le rapport molaire hydrazine/peroxyde d'hydrogène est compris entre 0.75 et 1.

7. Procédé selon l'une quelconque des revendications 1 à 6, caractérisé en ce que l'hydroxyde ou l'hydrazine agissent à une température comprise entre 20°C et 150°C.

8. Procédé selon la revendication 7, caractérisé en ce que l'hydroxyde ou l'hydrazine agissent à une température égale à la température d'ébullition du mélange à pression atmosphérique.

9. Procédé selon l'une quelconque des revendications 1 à 8, caractérisé en ce que le mélange ayant subi l'action de l'hydroxyde ou de l'hydrazine est vaporisé par ébullition pour former un courant gazeux qui entre en distillation.

10. Procédé selon la revendication 9, caractérisé en ce que la vaporisation par ébullition est réalisée à une pression absolue comprise entre 1 et 5 bars.

11. Procédé selon l'une quelconque des revendications 1 à 10, caractérisé en ce qu'au terme de l'action de l'hydroxyde ou de l'hydrazine le mélange est mis au repos et la phase huileuse qui s'en sépare éliminée.

## Patentansprüche

1. Verfahren zur Herstellung von hydroxyliertem Polybutadien, ausgehend von einem Dienmonomeren in Gegenwart von Wasserstoffperoxid und eines Lösungsmittels, worin, nach Abtrennung des das Produkt darstellenden hydroxylierten Polybutadiens, das Lösungsmittel in einem Gemisch vorliegt, aus welchem es durch Destillation wiedergewonnen wird, dadurch gekennzeichnet, daß dieses Gemisch vor der Destillation der Einwirkung eines Alkalihydroxids oder des Hydrazins unterzogen wird.

2. Verfahren nach Anspruch 1, dadurch gekennzeichnet, daß das Hydroxid Natriumhydroxid ist.

3. Verfahren nach Anspruch 1 oder 2, dadurch gekennzeichnet, daß das Hydroxid in einem Anteil von 0,1 bis 1 Gew.% des Gemischs eingesetzt wird, auf das es einwirkt.

4. Verfahren nach Anspruch 3, dadurch gekennzeichnet, daß das Hydroxid in einem Anteil von 0,3 bis 0,6 Gew.% des Gemischs eingesetzt wird, auf das es einwirkt.

5. Verfahren nach Anspruch 1, dadurch gekennzeichnet, daß das Hydrazin derart eingesetzt wird, daß das Molverhältnis von Hydrazin/Wasserstoffperoxid größer als 0,5 ist.

6. Verfahren nach Anspruch 5, dadurch gekennzeichnet, daß das Molverhältnis von Hydrazin/Wasserstoffperoxid zwischen 0,75 und 1 liegt.

7. Verfahren nach einem der Ansprüche 1 bis 6, dadurch gekennzeichnet, daß das Hydroxid oder das Hydrazin bei einer Temperatur zwischen 20 und 150°C einwirkt.

8. Verfahren nach Anspruch 7, dadurch gekennzeichnet, daß das Hydroxid oder das Hydrazin bei einer Temperatur gleich dem Siedepunkt des Gemischs unter Atmosphärendruck einwirkt.

9. Verfahren nach einem der Ansprüche 1 bis 8, dadurch gekennzeichnet, daß das der Einwirkung des Hydroxids oder Hydrazins unterzogene Gemisch durch Sieden verdampft wird, um einen Gasstrom zu bilden, der in die Destillation eingespeist wird.

10. Verfahren nach Anspruch 9, dadurch gekennzeichnet, daß die Verdampfung durch Sieden unter einem absoluten Druck zwischen 1 und 5 bar durchgeführt wird.

11. Verfahren nach einem der Ansprüche 1 bis 10, dadurch gekennzeichnet, daß das Gemisch am Ende der Hydroxid- oder Hydrazineinwirkung absetzen gelassen und die sich davon abscheidende ölige Phase entfernt wird.

## Claims

1. Process for the manufacture of hydroxylated polybutadiene from a diene monomer in the presence of hydrogen peroxide and of a solvent, in which, once the hydroxylated polybutadiene representing the output has been isolated, the solvent is in a mixture from which it is recovered by distillation, characterised in that before distillation the said mixture is subjected to the action of an alkali metal hydroxide or to that of hydrazine.

2. Process according to Claim 1, characterised in that the hydroxide is sodium hydroxide.

3. Process according to either of Claims 1 and 2, characterised in that the hydroxide is used in a proportion of 0.1 to 1% by weight of the mixture in which it acts.

4. Process according to Claim 3, characterised in that the hydroxide is used in a proportion of 0.3% to 0.6% by weight of the mixture in which it acts.

5. Process according to Claim 1, characterised in that the hydrazine is used so that the hydrazine/hydrogen peroxide molar ratio is higher than 0.5.

6. Process according to Claim 5, characterised in that the hydrazine/hydrogen peroxide molar ratio is between 0.75 and 1.

7. Process according to any one of Claims 1 to 6, characterised in that the hydroxide or hydrazine act at a temperature of between 20°C and 150°C.

8. Process according to Claim 7, characterised in that the hydroxide or hydrazine act at a temperature equal to the boiling temperature of the mixture at atmospheric pressure.

9. Process according to any one of Claims 1 to 8, characterised in that the mixture which has been subjected to the action of the hydroxide or of hydrazine is vaporised by boiling to form a gas stream which enters distillation.

10. Process according to Claim 9, characterised in that the vaporisation by boiling is produced at an absolute pressure of between 1 and 5 bars.

11. Process according to any one of Claims 1 to 10, characterised in that at the end of the action of the hydroxide or of hydrazine the mixture is left to stand and the oily phase which separates therefrom is removed.